# EUROPÄISCHE PATENTSCHRIFT

(11) **EP 1 529 970 B1**
(45) Veröffentlichungstag und Bekanntmachung des Hinweises auf die Patenterteilung: **27.12.2006**
(21) Anmeldenummer: 04021516.2
(22) Anmeldetag: 10.09.2004
(51) Int. Cl.: F16B 39/26

(54) **Unterlegscheibe und Befestigungselement**
Washer and fastener
Rondelle et élément de fixation

(30) Priorität: 04.11.2003 DE 20317178 U
(43) Veröffentlichungstag der Anmeldung: 11.05.2005
(73) Patentinhaber: Metallwarenfabrik Hermann Winker GmbH & Co. KG, 78549 Spaichingen (DE)
(72) Erfinder: Winker, Alexander, Dr., 78549 Spaichingen (DE)
(74) Vertreter: Lewandowsky, Klaus

(56) Entgegenhaltungen:
- US-A- 2 151 919
- US-A- 2 225 654
- US-A- 2 631 633
- US-A- 3 881 392

## Beschreibung

Die vorliegende Erfindung betrifft eine Unterlegscheibe für ein Befestigungselement mit einem umlaufenden Flansch zur Aufnahme eines mit einem Gewinde versehenen Schraubenbolzens umfassend einen ringförmigen, mit einer Öffnung versehenen Scheibenkörper mit mindestens einem Haltesteg, wobei an der Innenfläche der Öffnung wenigstens zwei Krallen angeordnet sind, die radial in die Öffnung hineinragen.

Eine gattungsgemäße Unterlegscheibe ist aus der EP 1 091 135 A2 bekannt. Diese Unterlegscheibe weist einen Scheibenkörper mit mindestens zwei angeformten Haltelappen auf, die um einen am Befestigungselement vorgesehenen umlaufenden Flansch umlegbar sind. Auf diese Weise wird die Unterlegscheibe am Befestigungselement unverlierbar gehalten.

Beim Anziehen einer Mutter mit Unterlegscheibe auf einem feststehenden Schraubenbolzen soll sich die Scheibe gegenüber dem verspannten Bauteil nicht verdrehen. Zu diesem Zweck wird der Reibwert zwischen Unterlegscheibe und einem Bauteil dadurch erhöht, dass an dem Scheibenkörper der Unterlegscheibe Ausklinkungen vorgesehen sind. Diese bewirken, dass die Unterlegscheibe beim Anziehen auf einem Schraubenbolzen auf der Oberfläche des Bauteils stehen bleibt, auch wenn der Reibwert zwischen Scheibenkörper und Bauteil an sich gering ist.

Das deutsche Gebrauchsmuster DE 94 00 671 U1 beschreibt eine Unterlegscheibe, die statt Haltelappen einen um die Scheibenkörper umlaufenden Ringsteg aufweist. Maßnahmen zur Erhöhung des Reibwertes zwischen Scheibenkörper und Bauteil sind nicht offenbart. Bei dieser Ausführungsform besteht ferner die Gefahr des Verklebens von Mutter und Scheibe beim Auftrag von Oberflächenbeschichtungen.

Die US 2,151,919 A betrifft ebenfalls eine Mutter mit einer Unterlegscheibe, deren Scheibenkörper auf der Ober- und Unterseite Ausklinkungen aufweist, welche sowohl mit der Oberfläche des Bauteils als auch mit der Unterseite der Mutter wechselwirken. Die Ausklinkungen dienen lediglich als Sicherung gegen das Lösen der Verbindung.

Die US-Patentschrift 2 225 654 beschreibt eine Befestigungseinheit mit einer Unterlegscheibe, deren radial nach innen ragende verschränkte Krallen außerhalb einer Öffnung in der Scheibe für den Durchtritt eines Schraubenbolzens liegen. Die Krallen graben sich in verschraubtem Zustand in die Oberfläche eines Bauteils und beschädigen diese Oberfläche.

Die US-Patentschrift 2 881 392 betrifft eine Befestigungseinheit umfassend eine konische Federscheibe mit in Richtung der Oberfläche eines Bauteils ausgerichteten Zacken. Diese Zacken graben sich in verschraubtem Zustand in die Oberfläche des Bauteils zerstörend ein.

Die US-Patentschrift 2 631 633 zeigt eine Mutter mit einer Sperrscheibe mit radial nach innen gerichteten und axial aufgebogenen Fingern. Dabei sind die Finger so gestaltet, dass der Oberfläche dieses Bauteils zugekehrte Wölbungen in verschraubtem Zustand in die Oberfläche des Bauteils beschädigend eindringen.

Bei der Verwendung von Befestigungselementen mit gattungsgemäßen Unterlegscheiben besteht immer die Gefahr der Beschädigung der Oberfläche des Bauteils durch das Verkanten bzw. Einpressen der Ausklinkungen im Bauteil. Die Herstellung der bisher bekannten Unterlegscheiben mit den Modifikationen ihrer Scheibenkörpern ist außerdem aufwendig zu fertigen, da die Ausklinkungen oder sonstigen Oberflächenveränderungen im Anschluss an die Herstellung der Unterlegscheibe zusätzlich angebracht werden müssen.

Die Aufgabe der vorliegenden Erfindung besteht darin, eine gattungsgemäße Unterlegscheibe bereitzustellen, die bei vergleichbarer Funktion einfacher ausgebildet und herzustellen ist, bei deren Verwendung Beschädigungen auf der Oberfläche des Bauteils vermieden werden und bei der die Gefahr des Verklebens von Befestigungselement und Scheibe zumindest reduziert ist.

Die Lösung besteht in einer Unterlegscheibe mit den Merkmalen des Anspruchs 1. Erfindungsgemäß ist also vorgesehen, dass die freien Enden der Krallen außerhalb des Scheibenkörpers derart angeordnet sind, dass beim Zusammenschrauben von Befestigungselement, Schraubenbolzen und Unterlegscheibe die Krallen nach innen in die Öffnung des Scheibenkörpers hineinbewegbar sind, derart, dass die freien Enden der Krallen in das Gewinde des Schraubenbolzens eingreifen. die freien Enden der Krallen in das Gewinde des Schraubenbolzens eingreifen.

Der Vorteil der erfindungsgemäßen Ausgestaltung der Unterlegscheibe besteht darin, dass sie in jeder Phase des Befestigungsvorgangs, d.h. während des Eindrehens und Festziehens des Befestigungselements auf einem Schraubenbolzen, unabhängig von der Größe der dabei einwirkenden Kräfte immer auf der Oberfläche des anliegenden und zu befestigenden Bauteils stehen bleibt. Dieser Effekt beruht im Wesentlichen auf zwei Mechanismen.

Zu Beginn des Befestigungsvorgangs sind zwei verschieden große Reibradien zu unterscheiden. Der erste, kleinere Reibradius r1 definiert sich über den Durchmesser des Auflagebereichs des Befestigungselements auf den Krallen. Der zweite, größere Reibradius r2 definiert sich über den Durchmesser der wirksamen Reibfläche der Unterlegscheibe auf dem Bauteil. Da das wirksame Reibmoment proportional zum Reibradius ist, ist das Reibmoment zwischen Scheibenkörper und Bauteil größer als das Reibmoment zwischen Befestigungselement und Krallen.

Daraus folgt, dass die Unterlegscheibe bereits zu Beginn des Befestigungsvorgangs und auch in dessen weiterem Verlauf stehen bleibt und sich nicht mit dem Befestigungselement dreht. Dieser Effekt kann ggf. noch verstärkt werden, wenn die Auflagefläche leicht nach innen gewölbt ist, so dass sie nur mit ihrem äußerem Rand auf dem Bauteil aufliegt. Die Unterlegscheibe kann also eine tellerfederartige Ausbildung haben.

In einer späteren Phase des Befestigungsvorgangs wird auf die Krallen von der Unterseite des Befestigungselements ein so großer Druck ausgeübt, dass sie sich nach unten in Richtung des Bauteils und gleichzeitig nach innen in die Öffnung der Scheibenkörper hinein bewegen. Das bedeutet, dass die Krallen in das Gewinde des Schraubenbolzens gepresst werden und sich darin verkeilen. Dies bewirkt zum Einen, dass die Unterlegscheibe auch in einer späteren Phase des Befestigungsvorgangs stehen bleibt und zum Anderen, dass die Festigkeit der Verbindung zwischen Befestigungselement und Schraubenbolzen erhöht wird.

Durch das Einpressen der Krallen in das Gewinde des Schraubenbolzens verformt sich das freie Ende der Krallen derart, dass ein Gewindegang entsteht. Das bedeutet, dass beim Lösen des Befestigungselements die Unterlegscheibe mitdreht.

Diese Ausgestaltung bewirkt ferner, dass ein mit der erfindungsgemäßen Unterlegscheibe verbundenes Befestigungselement im unverbauten Zustand auf den Krallen aufliegt. Dadurch bleibt zwischen der Unterseite des Befestigungselements und der Scheibenkörper ein Spalt bestehen. Wenn das Befestigungselement bspw. mit Lack, Öl oder Wachs beschichtet wird, kann beim anschließenden Abschleudern des Beschichtungsmaterials das überschüssige Material besser ablaufen. Die Gefahr des Verklebens von Befestigungselement und Unterlegscheibe wird dadurch zumindest verringert.

Die erfindungsgemäße Unterlegscheibe ist für jeden Typ von Befestigungselementen geeignet, insbesondere für verschiedene Mutterntypen, bspw. Standard-Sechskantmuttern. Sie kann auf einfache Weise durch Ausstanzen und Formen des Haltestegs und der Krallen hergestellt werden, wobei Haltesteg und Krallen in einem Arbeitsgang geformt werden können.

Gegenstand der vorliegenden Erfindung ist ferner ein Befestigungselement mit einer derartigen Unterlegscheibe.

Vorteilhafte Weiterbildungen ergeben sich aus den Unteransprüchen.

Eine besonders bevorzugte Ausgestaltung der Unterlegscheibe weist drei oder vier Krallen auf, die vorzugsweise gegeneinander versetzt angeordnet sind. Die oben beschriebenen Effekte sind bei dieser Ausführungsform besonders wirksam.

Eine andere vorteilhafte Weiterbildung sieht vor, dass die freien Enden der Krallen in Richtung des Befestigungselements oberhalb des Scheibenkörpers liegen, so dass sie beim Befestigungsvorgang besonders weit nach unten und innen gedrückt und damit besonders fest in das Gewinde des Schraubenbolzens gepresst werden.

In vorteilhafter Weise sind die Krallen an ihrer dem Befestigungselement zugewandten Seite jeweils mit einer Auflagefläche für die Unterseite des Befestigungselementes versehen, so dass sich der betreffende Reibradius r1 exakter definieren lässt. Diese Auflagefläche kann bspw. dadurch gebildet werden, dass die Krallen im Querschnitt in etwa eine S-Form oder Z-Form aufweisen. Die Krallen können aber auch geradlinig ausgebildet sein. Die Höhe der Krallen oberhalb des Scheibenkörpers ist vorzugsweise genauso bis doppelt so groß wie die Materialdicke.

Die Krallen können ferner an ihrem freien Ende eine kreissegmentförmige Einbuchtung aufweisen, die das Einpressen der Krallen in das Gewinde des Schraubenbolzens vereinfacht. Dabei kann die Form und Größe der Einbuchtung an den Umfang des Schraubenbolzens angepasst sein. Stattdessen können die Krallen an ihrem freien Ende aber auch eine gerade Kante aufweisen, so dass sie besonders weit in das Gewinde des Schraubenbolzens eingepresst, noch stärker verformt und noch effektiver verkeilt werden.

Die Krallen können, je nach Ausgestaltung der Unterlegscheibe und des Befestigungselements, etwa 1 bis 3 mm lang sein. Vorzugsweise entspricht ihre Länge etwa dem Doppelten der Dicke des für die Herstellung der Unterlegscheibe verwendeten Materials (bspw. des Bleches). Wichtig ist, dass die Länge der Krallen so bemessen ist, dass nach dem Verschrauben der von ihnen definierte Durchmesser d1 geringer ist als der Kerndurchmesser des verwendeten Schraubenbolzens. Das heißt also, dass sie gegenüber dem Kerndurchmesser des Schraubenbolzens ein Übermaß aufweisen. Schließlich ist es von Vorteil, den Durchmesser d2 der Öffnung des Scheibenkörpers auf den Nenndurchmesser des Gewindes des Befestigungselements abzustimmen, so dass sich eine optimale, kraftaufnehmende Abstützfläche ergibt.

Der mindestens eine Haltesteg der Unterlegscheibe kann als geschlossen umlaufender Ringsteg oder in Form eines ein- oder mehrfach radial geschlitzten Ringsteges oder in Form von mindestens zwei Haltelappen ausgebildet sein. Ein geschlossener Ringsteg vereinfacht das Stanzwerkzeug für die Herstellung der Unterlegscheibe, während unterteilte Haltestege das Umformen erleichtern.

Im Folgenden wird die Erfindung anhand eines in den beigefügten Figuren dargestellten Ausführungsbeispiels näher beschrieben. Es zeigen:
- Figur 1: eine Draufsicht auf eine Ausführungsform einer erfindungsgemäßen Unterlegscheibe in schematischer, nicht maßstabsgetreuer Darstellung;
- Figur 2: eine Schnittdarstellung der Unterlegscheibe entlang der Linie II - II in Figur 1;
- Figur 3: eine teilweise geschnittene Darstellung eines Befestigungselements mit der Unterlegscheibe gemäß Figur 1 nach dem Verschrauben von Bauteilen.

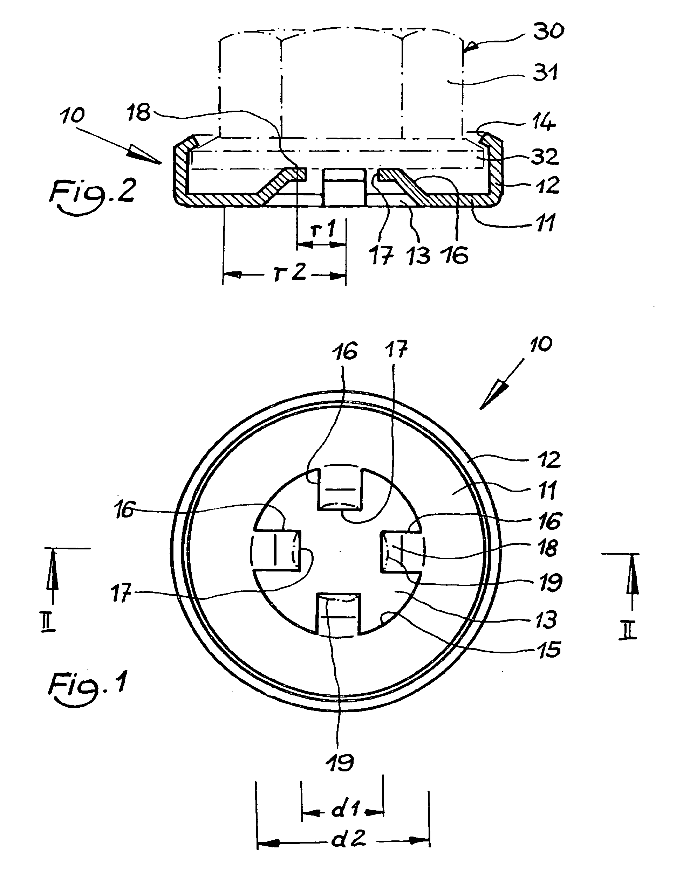

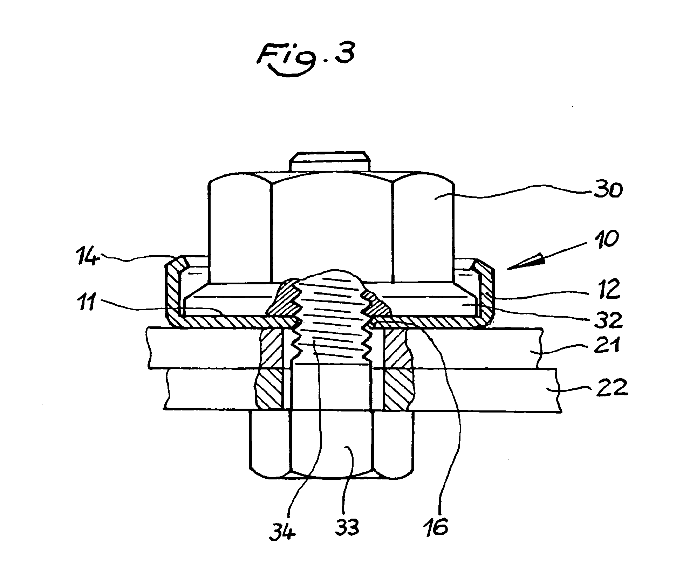

Die Figuren 1 und 2 zeigen ein Ausführungsbeispiel einer erfindungsgemäßen Unterlegscheibe 10, wobei in Figur 2 das Befestigungselement 30, im Beispiel eine Standard-Sechskantmutter, strichpunktiert angedeutet ist. Die Mutter 30 weist einen Mutternkörper 31 mit einem umlaufenden äußeren Flansch 32 auf. Der Flansch 32 ist einstückig an den Mutternkörper 31 angeformt.

Die Unterlegscheibe 10 weist einen Scheibenkörper 11 mit einem umlaufenden Ringsteg 12 auf. Der Scheibenkörper 11 ist mit einer Öffnung 13 versehen, die im Ausführungsbeispiel einen Durchmesser d2 aufweist, der auf den Durchmesser des verwendeten Befestigungselements abgestimmt ist. Der Ringsteg 12 überragt in axialer Richtung den Flansch 32 des Mutternkörpers 31 und ist an seinem oberen Ende 14 radial nach innen über den Flansch 32 gebogen. Selbstverständlich kann statt einem umlaufenden Ringsteg auch ein einfach oder mehrfach geschlitzter Ringsteg ausgebildet sein. Schließlich können auch einzelne (mindestens zwei) Haltelappen vorgesehen sein.

Die Unterlegscheibe 10 ist auf dem Befestigungselement 30 lose drehbar gehalten. Zu diesem Zweck ist sowohl axial als auch radial ein zumindest geringes Spiel zwischen dem Flansch 32 des Mutternkörpers 31 und dem Ringsteg 12 der Unterlegscheibe 10 vorgesehen.

Von der Innenfläche 15 der Öffnung 13 ragen im Ausführungsbeispiel vier um den gleichen Winkel versetzte Krallen 16 radial in die Öffnung 13 hinein. Es können auch mehr als vier oder weniger als vier Krallen 16 vorgesehen sein. Die Krallen 16 müssen auch nicht im gleichen Winkel versetzt zueinander angeordnet sein.

Im Ausführungsbeispiel sind die Enden 17 der Krallen 16 in Richtung auf das Befestigungselement 30 oberhalb des Scheibenkörpers 11 angeordnet. Der Abstand zum Scheibenkörper 11 beträgt im Ausführungsbeispiel das Doppelte der Dicke des für die Unterlegscheibe verwendeten Blechs, also etwa 2 mm. Der Abstand kann aber auch größer oder kleiner gewählt werden. Die Krallen sind ferner im Querschnitt etwa S-förmig gebogen. Dabei bildet der obere Teil des S eine Auflagefläche 18 für die Unterseite des Befestigungselements 30.

Die Länge der Krallen 16 entspricht im Ausführungsbeispiel etwa dem Doppelten der Dicke des für die Herstellung der Unterlegscheibe 10 verwendeten Bleches und beträgt etwa 2 mm bei 1 mm Blechdicke. Mit ihren freien Enden 17 definieren die Krallen 16 einen Durchmesser d1 innerhalb der Öffnung 13 des Scheibenkörpers 11. Der Durchmesser d1 ist daher kleiner ist als der Durchmesser d2 der Öffnung 13 selbst. Die Länge der Krallen 16 ist im Einzelfall so bemessen, dass der Durchmesser d1 nach dem Verschrauben geringer ist als der Kerndurchmesser des jeweils verwendeten Schraubenbolzens. Die Krallen 16 weisen also gegenüber dem Kerndurchmesser des Schraubenbolzens ein Übermaß auf.

Die Enden 17 der Krallen 16 sind im Ausführungsbeispiel linear ausgebildet. In Figur 1 ist eine weitere Variante strichpunktiert angedeutet, bei der die Enden 17 kreissegmentförmige Einbuchtungen 19 aufweisen. Die Wölbung der Einbuchtungen 19 kann ferner an den Durchmesser eines später einzudrehenden Schraubenbolzens angepasst sein.

Die erfindungsgemäße Unterlegscheiben 10 wird in an sich bekannter Weise durch Ausstanzen eines Rohlings und anschließendes Formen des Ringstegs 12 und der Krallen 16 hergestellt. Dabei können der Ringsteg 12 und die Krallen 16 in einem Arbeitsgang geformt werden.

Figur 3 zeigt das Befestigungselement 30 mit der Unterlegscheibe 10 aus Figur 1 nach dem Zusammenbau von zwei Bauteilen 21, 22 mittels eines Schraubenbolzens 33. Der Figur 3 ist zu entnehmen, dass die durch den Schraubenbolzen 33 einwirkenden Kräfte beim Herunterziehen des Befestigungselements 30 in Richtung auf den Scheibenkörper 11 die Krallen 16 nach unten und innen gedrückt und dabei in das Gewinde 34 des Schraubenbolzens eingepresst und darin verkeilt haben.

Die erfindungsgemäße Unterlegscheibe kommt somit ohne nachträgliche Modifikationen des Scheibenkörpers 11 aus und bewirkt dennoch zuverlässig, dass sich die Unterlegscheibe während des Befestigungsvorgangs nicht dreht.

## Patentansprüche

1. Unterlegscheibe (10) für ein Befestigungselement (30) mit einem umlaufenden Flansch (32) zur Aufnahme eines mit einem Gewinde (34) versehenen Schraubenbolzens (33), umfassend einen ringförmigen, mit einer Öffnung (13) versehenen Scheibenkörper (11) mit mindestens einem Haltesteg (12), wobei an der Innenfläche (15) der Öffnung (13) wenigstens zwei Krallen (16) angeordnet sind, die radial in die Öffnung (13) hineinragen, **dadurch gekennzeichnet, dass** die freien Enden (17) der Krallen (16) außerhalb des Scheibenkörpers (11) derart angeordnet sind, dass beim Zusammenschrauben von Befestigungselement (30), Schraubenbolzen (33) und Unterlegscheibe (10) die Krallen (16) nach innen in die Öffnung (13) des Scheibenkörpers (11) hineinbewegbar sind, derart, dass die freien Enden (17) der Krallen (16) in das Gewinde (34) des Schraubenbolzens (33) eingreifen.

2. Unterlegscheibe nach Anspruch 1, **dadurch gekennzeichnet, dass** sie drei oder vier Krallen (16) aufweist.

3. Unterlegscheibe nach einem der vorhergehenden Ansprüche, **dadurch gekennzeichnet, dass** der Abstand der freien Enden (17) vom Scheibenkörper (11) gleich groß bis doppelt so groß ist wie die Dicke des für die Unterlegscheibe (10) verwendeten Materials.

4. Unterlegscheibe nach einem der vorhergehenden Ansprüche, **dadurch gekennzeichnet, dass** die Krallen (16) an ihrer dem Befestigungselement (30) zugewandten Seite jeweils eine Auflagefläche (18) aufweisen.

5. Unterlegscheibe nach einem der vorhergehenden Ansprüche, **dadurch gekennzeichnet, dass** die Krallen (16) im Querschnitt in etwa eine S-Form oder Z-Form aufweisen.

6. Unterlegscheibe nach einem der Ansprüche 1 bis 4, **dadurch gekennzeichnet, dass** die Krallen (16) im Querschnitt geradlinig sind.

7. Unterlegscheibe nach einem der vorhergehenden Ansprüche, **dadurch gekennzeichnet, dass** die freien Enden (17) der Krallen (16) eine in etwa kreissegmentförmige Einbuchtung (19) aufweisen.

8. Unterlegscheibe nach einem der Ansprüche 1 bis 6 **dadurch gekennzeichnet, dass** die freien Enden (17) der Krallen (16) gerade ausgebildet sind.

9. Unterlegscheibe nach einem der vorhergehenden Ansprüche, **dadurch gekennzeichnet, dass** die Krallen (16) eine Länge aufweisen, die etwa dem Doppelten der Dicke des für die Unterlegscheibe (10) verwendeten Materials entspricht.

10. Unterlegscheibe nach einem der vorhergehenden Ansprüche, **dadurch gekennzeichnet, dass** der mindestens eine Haltesteg (12) als geschlossen umlaufender Ringsteg oder in Form eines ein- oder mehrfach radial geschlitzten Ringsteges oder in Form von mindestens zwei Haltelappen ausgebildet ist.

11. Unterlegscheibe nach einem der vorhergehenden Ansprüche, **dadurch gekennzeichnet, dass** sie in einer tellerfederartigen Ausbildung leicht gewölbt ist.

12. Befestigungselement (30) mit einem umlaufenden Flansch (32), an welchem eine Unterlegscheibe (10) nach einem der Ansprüche 1 bis 11 unverlierbar angebracht ist.

13. Befestigungselement nach Anspruch 12, nämlich eine Mutter.

## Claims

1. Washer (10) for a fastening element (30), having a circumferential flange (32) for receiving a screw bolt (33) provided with a thread (34), comprising an annular washer body (11) which is provided with an opening (13) and has at least one holding web (12), on the inner face (15) of the opening (13) there being disposed at least two claws (16), which jut radially into the opening (13), **characterized in that** the free ends (17) of the claws (16) are arranged outside the washer body (11) in such a manner that when fastening element (30), screw bolt (33) and washer (10) are screwed together, the claws (16) can be moved inwards into the opening (13) in the washer body (11), in such a manner that the free ends (17) of the claws (16) engage in the thread (34) of the screw bolt (33).

2. Washer according to Claim 1, **characterized in that** it has three or four claws (16).

3. Washer according to one of the preceding claims, **characterized in that** the distance of the free ends (17) from the washer body (11) is the same size to twice as large as the thickness of the material used for the washer (10).

4. Washer according to one of the preceding claims, **characterized in that** the claws (16), on their side facing the fastening element (30), respectively have a bearing surface (18).

5. Washer according to one of the preceding claims, **characterized in that** the claws (16) in cross section have an approximate S-shape or Z-shape.

6. Washer according to one of Claims 1 to 4, **characterized in that** the claws (16) are rectilinear in cross section.

7. Washer according to one of the preceding claims, **characterized in that** the free ends (17) of the claws (16) have an indentation (19) approximately in the shape of a circular segment.

8. Washer according to one of Claims 1 to 6, **characterized in that** the free ends (17) of the claws (16) are of straight configuration.

9. Washer according to one of the preceding claims, **characterized in that** the claws (16) have a length corresponding to about twice the thickness of the material used for the washer (10).

10. Washer according to one of the preceding claims, **characterized in that** the at least one holding web (12) is configured as a closed circumferential annular web, or in the form of an annular web having single or multiple radial slots, or in the form of at least two holding lugs.

11. Washer according to one of the preceding claims, **characterized in that**, in a cup-spring-like configuration, it is arched slightly.

12. Fastening element (30) having a circumferential flange (32), to which a washer (10) according to one of Claims 1 to 11 is captively fitted.

13. Fastening element according to Claim 12, namely a nut.

## Revendications

1. Rondelle (10) pour un élément de fixation (30) comprenant une bride périphérique (32) pour recevoir un boulon (33) pourvu d'un filetage (34), comprenant un corps de rondelle (11) annulaire, pourvu d'une ouverture (13), avec au moins une patte de retenue (12), au moins deux griffes (16) étant disposées sur la surface intérieure (15) de l'ouverture (13), lesquelles pénètrent radialement dans l'ouverture (13), **caractérisée en ce que** les extrémités libres (17) des griffes (16) sont disposées en dehors du corps de rondelle (11) de telle sorte que lors du vissage de l'élément de fixation (30), du boulon (33) et de la rondelle (10) ensemble, les griffes (16) puissent être déplacées vers l'intérieur dans l'ouverture (13) du corps de rondelle (11) de telle sorte que les extrémités libres (17) des griffes (16) viennent en prise dans le filetage (34) du boulon (33).

2. Rondelle selon la revendication 1, **caractérisée en ce qu'**elle présente trois ou quatre griffes (16).

3. Rondelle selon l'une quelconque des revendications précédentes, **caractérisée en ce que** la distance des extrémités libres (17) du corps de rondelle (11) est la même à deux fois plus grande que l'épaisseur du matériau utilisé pour la rondelle (10).

4. Rondelle selon l'une quelconque des revendications précédentes, **caractérisée en ce que** les griffes (16) présentent sur leur côté tourné vers l'élément de fixation (30) à chaque fois une face d'appui (18).

5. Rondelle selon l'une quelconque des revendications précédentes, **caractérisée en ce que** les griffes (16) présentent une forme approximativement en S ou en Z en section transversale.

6. Rondelle selon l'une quelconque des revendications 1 à 4, **caractérisée en ce que** les griffes (16) sont rectilignes en section transversale.

7. Rondelle selon l'une quelconque des revendications précédentes, **caractérisée en ce que** les extrémités libres (17) des griffes (16) présentent un renfoncement (19) approximativement en forme de segment de cercle.

8. Rondelle selon l'une quelconque des revendications 1 à 6, **caractérisée en ce que** les extrémités libres (17) des griffes (16) sont rectilignes.

9. Rondelle selon l'une quelconque des revendications précédentes, **caractérisée en ce que** les griffes (16) présentent une longueur qui correspond approximativement au double de l'épaisseur du matériau utilisé pour la rondelle (10).

10. Rondelle selon l'une quelconque des revendications précédentes, **caractérisée en ce que** l'au moins une patte de retenue (12) est réalisée sous forme de patte annulaire périphérique fermée ou sous forme d'une patte annulaire fendue une ou plusieurs fois radialement, ou sous forme d'au moins deux languettes de retenue.

11. Rondelle selon l'une quelconque des revendications précédentes, **caractérisée en ce qu'**elle est légèrement courbée dans une réalisation de type rondelle Belleville.

12. Elément de fixation (30) comprenant une bride périphérique (32), sur lequel est montée une rondelle (10) selon l'une quelconque des revendications 1 à 11, de manière imperdable.

13. Elément de fixation selon la revendication 12, à savoir un écrou.
